# EUROPEAN PATENT APPLICATION

(11) **EP 4 573 909 A1**
(43) Date of publication of application: **25.06.2025**
(21) Application number: 23425067.8
(22) Date of filing: 18.12.2023
(51) Int. Cl.: A21C 11/00, A21C 3/02

(54) **A DEVICE FOR STRETCHING THE DOUGH OF A BAKED PRODUCT, IN PARTICULAR A PIZZA**

(71) Applicant: Emme S.r.l., 74123 Taranto (TA) (IT)
(72) Inventor: Mazzuto, Antonio, 74122 Taranto (TA) (IT)
(74) Representative: Emmi, Mario

(57) **Abstract**

The present invention relates to a device which enables to stretch the dough of a baked product, for example a pizza. The device comprises a disc-shaped rest plane c having a magnet in the center and on the periphery, placed with a radial pattern, a further plurality of magnets in such a way as to be able to apply on each magnet a ferrous weight that locks the dough in the central position of the rest plane thus enabling to stretch the edges thereof and gradually locking them to the other magnets.

## Description

### Scope of the invention

The present invention relates to the technical field of devices for producing baked products.

In particular, the invention relates to a device which enables a user to easily stretch a dough of a baked product, for example pizza and/or similar products such as flatbread etc. and anyway all those baked products whose dough must be stretched.

### Brief outline of the prior art

It is known that some baked products, such as pizza or similar products such as flatbread, need to be processed by stretching the dough. With this operation, starting from a small dough ball previously made, the small dough ball is flattened, therefore stretched, by conferring it the final shape (generally disc-shaped for example in the case of pizza) on which the ingredients are then distributed before being placed into the oven. Generally, in the case of pizza, the pizza maker arranges tens of dough balls ready to be stretched.

In the specific case of pizza, the pizza maker kneads the dough by hand in order to stretch it by giving it a disc-like circular shape even if other shapes are used and/or possible (for example rectangular in the case of pizza baked in a baking tray). Professional pizza makers own great skills and manual skills in this kind of operation and therefore they can readily stretch the dough even by making it spin in the air and rotate it by holding it up on their fingers. In this way, the dough is stretched, and it takes the classic disc-like shape which is then seasoned by the pizza maker and placed into the oven to be baked.

It is clear that the operation of stretching the dough is a manual operation which is not simple and therefore, if it is performed by an operator not skilled in the art, can be difficult and even impossible. If the dough is stretched incorrectly, the final product will be of poor quality and wrongly baked.

Existing tools such as the traditional rolling pin can be helpful to be passed onto the dough ball for stretching it. However, although the rolling pin is a helpful tool, it is however difficult to be able to stretch the dough for example when the stretched dough must be given a circular shape. Thus, the use of the rolling pin requires some manual skill.

There are also real presses made up of a lower circular plate on which the dough ball rests and this dough ball is stretched by pressing it between said lower rest plate and an upper plate still with a circular shape (for example movable towards the lower plate). In this way, the dough, comprised between the two plates, is stretched, and assumes the circular disc-like shape. Although it is functional, this solution requires an expensive and bulky equipment and, for this reason, is not easily accessible to everybody. In fact, this type of press is generally used in restaurant chains such as service stations or the like where a fast and extemporary preparation of big amounts of pizza is performed each day. Therefore, this solution is hardly accessible to individuals for domestic use.

### Summary of the Invention

Therefore, an aim of the present invention is to provide a device for stretching the dough of a baked product, for example a pizza dough, which solves the aforesaid technical drawbacks.

In particular, the aim of the present invention is to provide a device which enables to stretch the dough for preparing pizza in a simple way, with a structurally simple and cheap device which is also appropriate for domestic use.

These and other aims are achieved with the present device for stretching the dough of a baked product, according to claim 1.

Preferably, said baked product can be pizza and therefore the dough is relative to pizza.

This device comprises:
- A rest plane (10) on which the dough to be stretched can be placed in use;
- First locking means (20) configured to allow to lock the dough in a position on said rest plane;
- Second locking means (30) arranged at a certain radial distance from said first locking means (20) and configured to lock an edge portion of said dough with which they come into contact in use.

In this way, all the above-mentioned technical inconveniences are advantageously solved.

Through the first locking means (20) the dough can be locked on the rest plane (for example in a central position or more or less central of the rest plane) by keeping the perimeter or edge of dough free.

Advantageously, in this way, in use, the dough can be kept locked in position on said rest plane 10 by said first locking means 20.

Once the dough has been locked centrally, the dough can thus be stretched by taking advantage of said locking means 30 which enable to lock the edge areas of the dough itself.

The described device is structurally simple, easy to use and is appropriate for domestic sizes and domestic use.

According to a possible solution of the invention, said second locking means (30) are fixed and placed at a predetermined radial distance from said first locking means.

Advantageously, in this way, in use, the dough kept locked in position on said rest plane by said first locking means (20) can be manually stretched by bringing one or more edge areas of the dough at said second locking means (30), which second locking means lock this edge area.

For example, one can proceed sequentially for a plurality of edge areas by grabbing the dough starting from a first edge area and stretching the dough until bringing this first edge area at these second locking means 30 and locking it.

In succession, one proceeds in the same way by stretching and locking a second edge area and thus proceeding with other edge areas until stretching more perimeter points of the dough (for example to close a circumference) and therefore completing a stretching operation in which the initial dough ball, held by the first locking means 20, is stretched for example to form a disc.

According to a further possible variant of the invention, said second locking means (30) are radially movable along said rest plane (10) in such a way as to be able to vary the radial distance from said first locking means (20) thereby being able to be actuated to pass from a first position (A) close to said first locking means (20) to a second position (B) radially spaced from said first locking means (20) and vice versa.

Substantially, the second locking means can be translated along the plane to be brought from a first position (A) close to the first locking means to a second position (B) more radially spaced from the first locking means, for example being brought to the periphery of the rest plane.

In this way, advantageously, in use, the dough kept locked in position on said rest plane by said first locking means (20) can be contextually fixed by its edges to the second locking means (30) placed in said first position (A).

In this way, in use, after actuating said second locking means (30), said second locking means (30) move to pass from said first position (A) to the second position (B) thus determining the stretching of the dough.

Advantageously, in a preferred configuration of the invention, said first locking means (20) are first locking means of the magnetic type.

Thus, one takes advantage of the generation of a magnetic field.

Therefore, more specifically, it is preferred the use of a magnet which is coupled with an element sensitive to the magnetic field, for example a metallic element for example of the ferrous type (such as iron) or nickel-based or cobalt-based.

In fact, as known, the magnetic field generates a force attractive to the element that is sensitive to the magnetic field, for example the ferrous element (for example iron). On the basis of the intensity of the magnetic field generated, a coupling force is generated between the magnet and the element sensitive to the magnetic field.

As well known, the magnetic field attracts to itself the element sensitive to the magnetic field, for example the ferrous element depending on polarity.

Therefore, this has the double advantage of being able to generate a high locking force, trapping the dough between a magnet and an element sensitive to the magnetic field and that are attracted to each other because of the magnetic field with a force that depends on the intensity of the magnetic field. If a magnet of a suitable magnetic force is selected, even using an element sensitive to the magnetic field of small sizes and weight, a great attractive force is obtained in any case. Moreover, low-cost magnets can be easily found on the market.

Advantageously, said first magnetic-type locking means comprise at least one central magnet cooperating with a central element sensitive to the magnetic field (20'), for example a metallic element such as a ferrous element.

Advantageously, said central magnet (20) can be arranged below said rest plane 10 or, alternatively, can be arranged in a seat obtained in said rest plane.

Advantageously, this central magnet (20) can also be arranged in such a way as to be emerging and/or flush with said rest plane 10.

In this way, the dough rests well on said central magnet 20 to be then locked without deformations which can spoil the following stretching operation.

As an alternative to what has been mentioned, the inverted solution can be used in which said central element (20') sensitive to the magnetic field (for example a metallic element as mentioned) can be arranged below said rest plane or, alternatively, can be arranged in a seat obtained in said rest plane.

In this case, the magnet 20 would be the separated element which is applied on said central element (20') sensitive to the magnetic field.

Also in this case, advantageously, this central element, sensitive to the magnetic field, can be arranged in such a way as to be emerging and/or flush with said rest plane 10.

Advantageously, in the same way, said second locking means 30 can all or partially be second magnetic-type locking means, for example, more specifically, of the ferromagnetic type as in the preferred case described above.

Advantageously, said second magnetic-type locking means can comprise, in this case, at least a plurality of peripheral magnets 30 each cooperating with a respective peripheral element (30') sensitive to the magnetic field, for example a peripheral metallic element (30'), in particular for example a ferrous element.

Advantageously, each peripheral magnet 30, can be arranged for example below said rest plane 10 or is arranged in a seat, in such a way as to be in both cases at a certain radial distance from the positioning of said first locking means (for example the central magnet 20 as mentioned).

Advantageously, also said peripheral magnets 30 can be flush with said rest plane 10.

Advantageously, in an opposite way, the relative peripheral element sensitive to the magnetic field (30') can be arranged below said rest plane or can be arranged in a specific seat of the plane 10, for example a peripheral metallic element (30') and each cooperating with said peripheral magnet 30.

In this case, advantageously, said peripheral magnet 30 would be the separated element which is coupled with the relative peripheral element (30') sensitive to the magnetic field.

Advantageously, according to a preferred configuration of the invention, a central magnet 20 relative to said first magnetic-type locking means is arranged on said rest plane 10 in a central or substantially central position of said rest plane and is cooperating with said central element (20') sensitive to the magnetic field, preferably a metallic element such as an iron element, which is magnetically coupled, in a removable way, to said central magnet.

Still according to this preferred configuration of the invention, advantageously, around said central magnet 20, at a predetermined radial distance, said plurality of peripheral magnets 30 relative to the second magnetic-type locking means is arranged, in such a way as to surround said central magnet and with each of said peripheral magnets 30 cooperating with the own relative peripheral element (30') sensitive to the magnetic field, preferably a metallic element for example a ferrous one, which is magnetically coupled, in a removable way, to said peripheral magnet.

Thus, the central magnet 20, embedded in the rest plane 10, cooperates with its separated element (20') with which it is magnetically attracted, and which can thus be magnetically coupled or separated.

In the same way, each of the peripheral magnets 30, embedded in the rest plane to surround the central magnet, cooperates with an own separated element that is the peripheral element (30') which can be magnetically coupled or separated thereto.

In all the above-mentioned cases, advantageously, two configurations can be possible.

In particular, in case the second locking means (30) are fixed, a predetermined number of peripheral magnets (30) are arranged in a fixed way at a certain radial distance from the central magnet (20) in such a way as to surround it.

Obviously, as mentioned above, the equivalent element sensitive to the magnetic field (30') can replace the peripheral magnets.

Advantageously, instead, in case of radially movable second locking means, each peripheral magnet (30) (or the relative element sensitive to the magnetic field (30')) is connected to an extendable/retractable actuator in such a way as to be able to pass from the first position (A) to the second position (B) and vice versa.

Advantageously, in a hybrid variant of the invention, these peripheral magnets (both in the fixed and in the movable solution) can be interposed to hook elements also adapted to lock an edge area of the dough given that they are able to hook it.

Substantially, a hook element is used for locking instead of the magnet.

Advantageously, the magnets relative to the first and second ferromagnetic-type means can be activated/deactivated through a control 50 of activation/deactivation of the magnetic field.

Therefore, the magnetic field can be activated for example when the metallic element is placed on the magnet with the portion of dough trapped and comprised between the magnet and the element sensitive to the magnetic field, for example the metallic element.

Once the magnetic field has been activated, it will determine a force of attraction which will push locally the relative portion of dough thus locking it.

In case of movable magnets (or of the element sensitive to the movable magnetic field) the actuators which control said motion can be actuated through a command.

Advantageously, according to a preferred embodiment of the invention, a central magnet 20 is arranged (for example embedded), on said rest plane in a central or substantially central position of said circular rest plane and is cooperating with said central metallic element (20'), preferably a ferrous one, which is magnetically coupled, in a removable way, to said central magnet.

In the same way, advantageously, around said central magnet 20, at a predetermined radial distance, said plurality of peripheral magnets 30 is arranged in such a way as to surround said central magnet.

Advantageously, as mentioned, each of said peripheral magnets are cooperating with its relative peripheral element 30', preferably a ferrous one, which is magnetically coupled, in a removable way, to said peripheral magnet.

Advantageously, in case said second locking means (30) are fixed, a predetermined number of peripheral magnets (30) is arranged in a fixed way at a certain radial distance from the central magnet (20) in such a way as to surround it and, in case of radially movable second locking means, each peripheral magnet (30) is connected to an extendable/retractable actuator in such a way as to be able to pass from the first position (A) to the second position (B) and vice versa.

Advantageously, for example in case of production of baked products with a circular shape, for example pizza, the rest plane can be circular.

Advantageously, notwithstanding the foregoing, in a further variant of the invention the peripheral magnet can be replaced all or partially with said hook elements 130.

An object of the present invention is also the use of a device according to one or more of the previous features for stretching the dough of a baked product, for example a pizza dough.

An object of the present invention is also a method for stretching the dough of a baked product, preferably a pizza dough, the method comprising the following steps:
- Arranging a device according to one or more of the previous features indicated above;
- Arranging the dough 200 on the rest plane (10) at the first locking means 20 and locking dough in said position;
- After having locked the dough, performing the subsequent step of stretching the dough.

Advantageously, in case of second fixed locking means (30), said step of stretching comprises the operation of pulling a plurality of edge areas of dough, thus determining an elongation of dough, until each of said pluralities of edge areas are led at a second locking means (30, 30') for locking said edge area in position.

Advantageously, in case of second movable locking means (30), said stretching step comprises the operation of applying the dough on the first locking means (20) and with second locking means in said first position (A) close to the first locking means (20), thus locking the edge areas of the still unstretched dough on said second locking means.

Advantageously, it is then provided to subsequently actuate the second locking means (20), which, moving from the first position (A) to the second position (B), automatically stretch the dough.

Advantageously, a step of activating the central magnet (activation of the magnetic field) placed centrally to the rest plane and of arranging the dough on said rest plane at said central magnet can be provided.

Obviously, any sequence of activating the magnet and laying the dough is possible.

Then the element sensitive to the magnetic field, preferably a metallic element such as iron, is subsequently applied on the central magnet in such a way that the magnetic field exerts a force of attraction of the central element (20') sensitive to the magnetic field with the central magnet to which it is coupled by trapping and locking the dough between each other.

For example, the activation of the magnetic field can also occur once the relative element (20') sensitive to the magnetic field is placed in position on the dough and then once the dough has been trapped between the element sensitive to the magnetic field and the magnet.

Advantageously, still according to the described method, after said locking of the dough, the step of stretching the dough is provided.

Advantageously, in case of manual stretching with the fixed peripheral magnets, this step of stretching provides that a plurality of edge areas of dough is dragged at the peripheral magnets 30 in such a way that, once said peripheral magnets have been activated, the magnetic field is generated.

In this way, by applying the relative element sensitive to the magnetic field, preferably a metallic element such as a ferrous element, on the peripheral magnet on which the edge area of the dough is placed, the relative edge area of the dough is trapped between the peripheral magnet 30 and the peripheral element sensitive to the magnetic field (30') given that the two elements are magnetically attracted to each other.

Therefore, if a certain number "n" of peripheral magnets is provided, the dough locked in the center can be stretched by taking "n" edge areas and pulling this edge area along a radial direction (thereby causing a stretching or straightening thereof) until it is led on the relative peripheral magnet. At this point this edge is locked once the magnetic field has been activated and the element sensitive to the magnetic field has been placed above.

This operation can be performed in succession an edge at a time thus starting with a first edge area which faces radially a peripheral magnet to then pass to the subsequent edge area which faces a subsequent peripheral magnet until covering all "n" peripheral magnets which are placed circularly to surround the central magnet.

In this way, the dough is stretched with a substantially circular shape, for example to produce traditional pizza.

### Brief description of the drawings

The invention, in one or more embodiments thereof, will be described in detail as follows according to the following drawings:
- Figure 1 shows an overall axonometric view of a preferred configuration of the invention;
- Figures 2 to 6 show an example of operation;
- Figure 7 shows a variant of the invention;

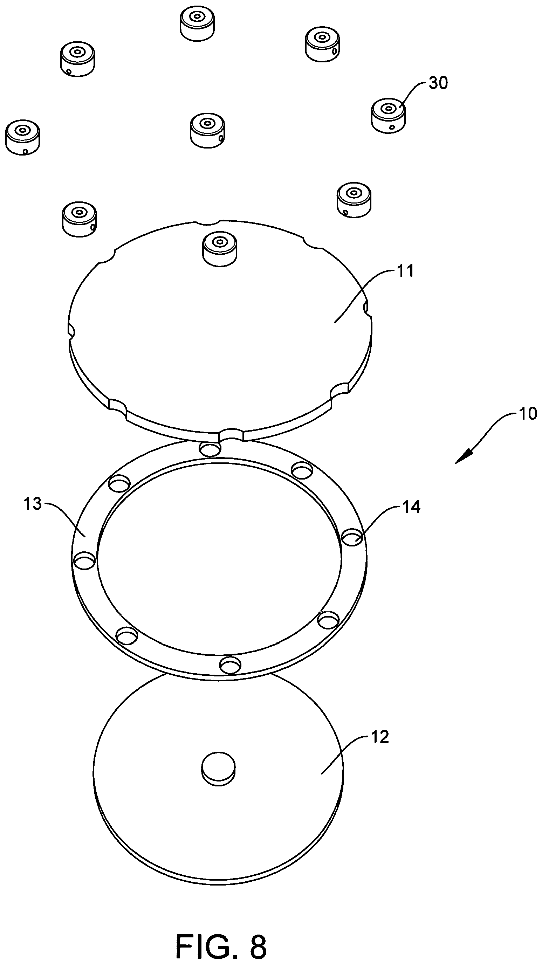

- Figure 8 shows an exploded view of the plane 10;
- Figure 9 shows a further variant of the invention.

### Detailed Description of some preferred configurations of the Invention

The object of invention is therefore a device for stretching the dough of a baked product, preferably a pizza dough.

The device comprises:
A rest plane 10 on which the dough to be stretched can be placed in use;
First locking means (20, 20') configured to allow to lock the dough in a position on said rest plane;
Second locking means (30, 30') arranged at a certain radial distance from said first locking means and configured to lock an edge portion of said dough with which they come into contact in use.

In this way, in use, the dough kept locked in position on said rest plane 10 by the first locking means can be stretched.

### FIRST CONFIGURATION OF THE INVENTION:

In this case the second locking means comprise magnets or elements sensitive to the magnetic field which are placed in a fixed way to surround the first locking means.

In this way, by bringing one or more edge areas of the dough at said second locking means, the second locking means lock this edge area.

In this way, the dough can be stretched.

In fact, since the dough 200 is now locked in a more or less central area of the rest plane 10 through the first locking means (20, 20'), now it can be grabbed (for example manually) by its edges and straightened (therefore stretched) until it reaches these edges at the second locking means (30, 30') where they are locked.

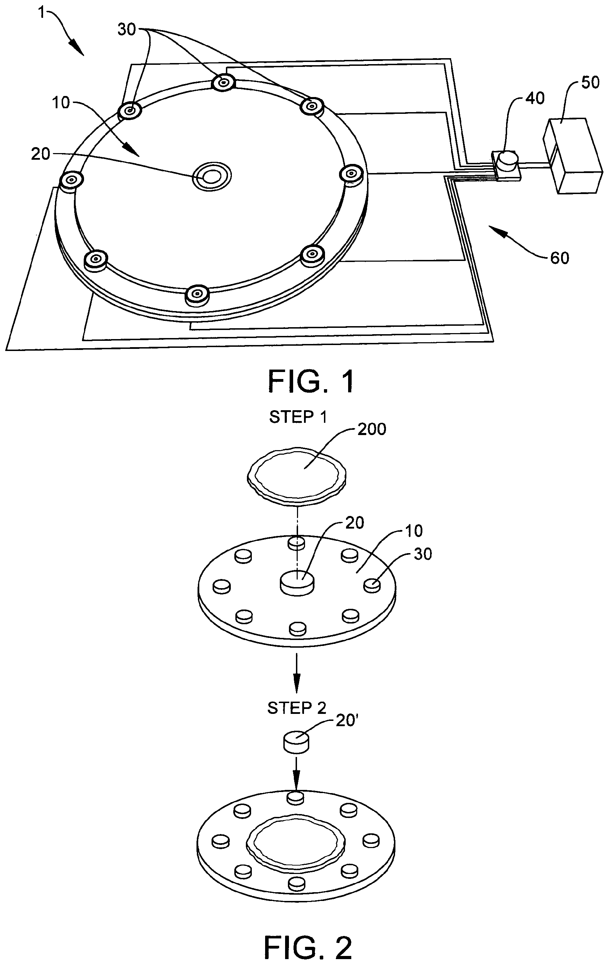

With reference to Figure 1, the device comprises a rest plane 10, for example with the shape of a disc.

Therefore, said first locking means (20, 20') are arranged more or less in a central area of the rest plane. If the rest plane is a disc, then they could be advantageously arranged in the center of the disc.

In a preferred embodiment, these first locking means can be in the form of magnetic means, preferably ferromagnetic.

Thus, the magnetic means comprise a magnet 20 cooperating with an element (20') sensitive to the magnetic field, for example a ferrous element (in this case they are ferromagnetic elements).

For example, in the center of the rest plane a central magnet 20 can be embedded (as shown in Figure 1) which will be cooperating with a central element 20' sensitive to the magnetic field.

In the same way, the second locking means (30, 30') can be also in the form of magnetic means, preferably ferromagnetic.

Therefore, exactly like the case above, the magnetic means comprise a magnet cooperating with an element sensitive to the magnetic field, for example a ferrous element (in this case they are ferromagnetic elements).

Thus, again as evident in Figure 1, in the periphery of the rest plane 10, placed in a radial pattern, a further plurality of peripheral magnets 30 can be provided, which are arranged according to a certain angular spacing between each other to surround the central magnet 20.

For each magnet (both for the central one 20 and for the peripheral ones 30), an element sensitive to the magnetic field is provided, for example a metallic element, for example a ferrous element, detachable from the magnet.

This element (20', 30') can be for example with the shape of a disc which retraces a possible disc shape of the magnet (20, 30) .

In this way, on each magnet it is possible to apply a weight constituted by the separated body or element sensitive to the magnetic field which is coupled with the magnet due to the attractive magnetic force that is generated.

In this way, through a magnetic coupling between the magnet and the complementary element sensitive to the magnetic field, the dough remains locked and can be stretched.

The operating principle of the attractive magnetic force used here in the present invention is well known and therefore will not be described in further detail.

In particular, as described above, the dough 200 can be locked in a central position of the rest plane 10 through the activation of the magnetic field between the magnet 20 and the central element 20' complementary to the magnet, locking between each other, through the attractive magnetic force which is generated.

In this way, the dough is steadily fixed to the plane 10, thus enabling to gradually stretch the edges thereof by stretching them and locking them to the other magnets 30 according to the same criterion.

Substantially, the dough is applied on the disc at the central magnet 20 and the dough 200 is applied above to cover it, for example the pizza dough (see Figure 2). Subsequently, the complementary element 20', which is the one intended to be coupled with said magnet 20 and attracted by it when the magnetic field is activated, is applied on the dough. The magnetic force attracts the component 20' sensitive to the magnetic field to the magnet 20 thus determining a pushing force which steadily traps the dough at the magnet 20.

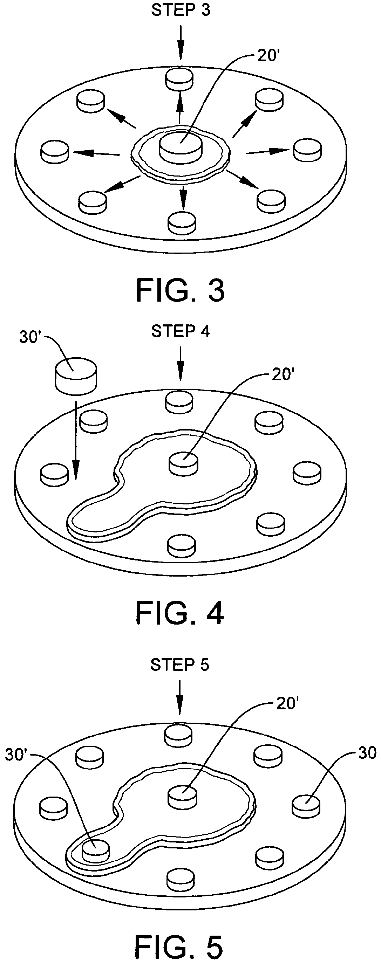

Therefore, according to the above, Figure 2 outlines a plane 10, the central magnet 20 and the fixed peripheral magnets 30. Figure 2 also shows a dough 200 which, as per step 2 of Figure 2, is laid on the plane 10 at the central magnet 20, thereby covering it. Therefore, a central element 20' (for example a small iron block) sensitive to the magnetic field is applied on it so that is attracted by the magnet 20 thus locking the dough 200 on the plane 10. This step wherein the dough 200 is locked on said plane 10 is evident in Figure 3 - step 3 which shows indeed the element 20' resting on the dough which is in turn arranged on the plane at the magnet 20. Figure 3 also shows the radial arrows which branch from the dough to the peripheral magnets 30 to indicate that now the dough, once locked centrally, is ready to be stretched (for example manually).

The subsequent sequence (step 4) of Figure 4 shows indeed the dough which is steadily fixed to the plane. The operator, for example the pizza maker, can grab the edge of the dough with a hand and stretch it until radially reaching a peripheral magnet 30 to then lock this stretched part through the application on the stretched part of dough which covers the peripheral magnet 30 with a peripheral element 30' sensitive to the magnetic field (for example a small iron block 30'). The peripheral element 30' is attracted by the magnet 30 by generating a force of attraction which traps this part of dough. Therefore, Figure 5 shows the dough locked in said position in which a portion thereof has been stretched.

Then one can proceed with the other peripheral magnets 30.

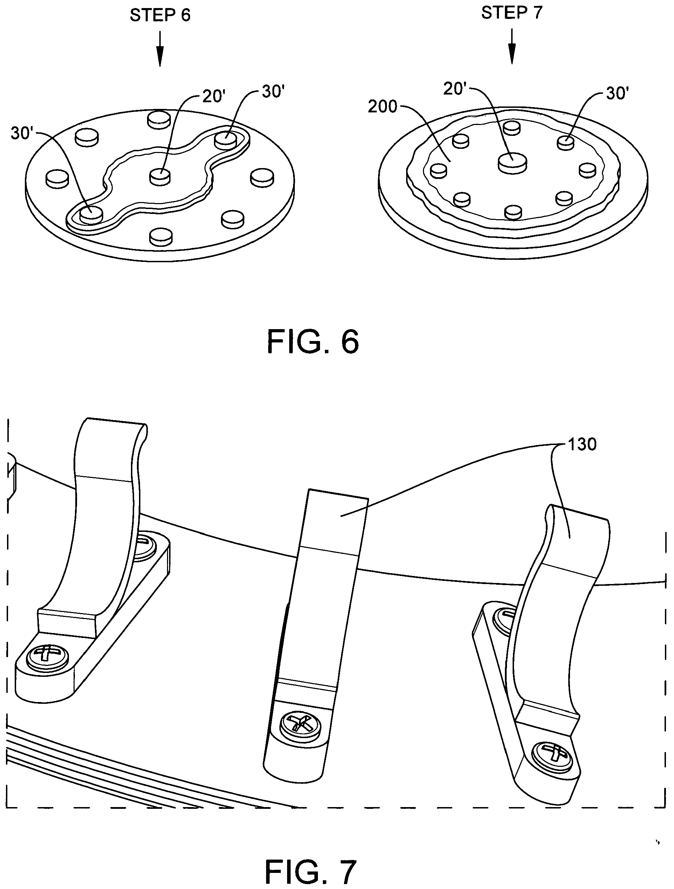

Therefore, as shown in the subsequent Figure 6, it highlights how the process of stretching the dough continues with another peripheral portion of the dough which is stretched on the corresponding peripheral magnet 30 and locked with the complementary peripheral element 30' to then proceed sequentially for the other edge parts until covering all the magnets 30 and therefore completing the stretching operation, as indicated in the step 7 of Figure 6.

Obviously, the opposite solution in which the plane is provided with elements sensitive to the magnetic field, such as small iron blocks, to which the magnet is applied to cover them can be equivalently applied.

Therefore, the described solution easily enables to stretch a dough of a baked product.

Going back to Figure 1, one can infer that the advantage of using the magnets 20 in the plane 20 (and therefore having the corresponding elements sensitive to the magnetic field (20', 30') for example metallic element such as iron, as detached/separable elements) is that the magnets can be controlled by a controller 50 which activates/deactivates them. In fact, the cables which control an activation/deactivation of the magnetic field can be stretched on the plane.

By activating them, the magnetic field which attracts the corresponding elements sensitive to the magnetic field is activated while by deactivating them, the magnetic field is deactivated.

In this way, for example, the elements can be easily removed by the magnets once the operation of stretching the dough has been completed.

A button 40, through suitable wiring 60, enables to easily control activation/deactivation of the magnets.

The use of magnets is advantageous as it is possible to use complementary elements sensitive to the magnetic field that are very light, thereby easily removable by the user to apply them on the dough but that exert a great force for pushing and locking the dough because they are attracted by the magnetic field.

Otherwise, simple weights could be used (for example steel discs) without the need of magnets and applying the same principle described herein (therefore, a viable solution) but with the drawback of having to move very heavy discs, way over two or three kilos.

Therefore, the preferred configuration of the invention provides that the magnets are applied to the plane 10 and that the element sensitive to the magnetic field in the form of a distinct and separated element, for example an iron element such as an iron disc, is coupled with the magnet possibly with the shape of a disc as well.

In a variant of the invention, as shown in Figure 7, the second locking means, i.e. the ones that develop around the periphery of the rest plane, can be in the form of hooks 130 adapted to lock the dough by grabbing it.

A hybrid solution with hooks and magnetic means can be provided.

Figures describes an exploded view which structurally shows the plane 10 made by an upper plane 11 and a lower plane 12 which are coupled overlapping each other and surrounded by a disc 13.

The disc 13 forms the seats 14 for the peripheral magnets 30.

This configuration with the upper plane 11 overlapping the lower plane 12 enables to create a passage space for the cables which control activation/deactivation of the magnets through the control 50 and the activation/deactivation button 40.

### FURTHER POSSIBLE CONFIGURATION OF THE INVENTION:

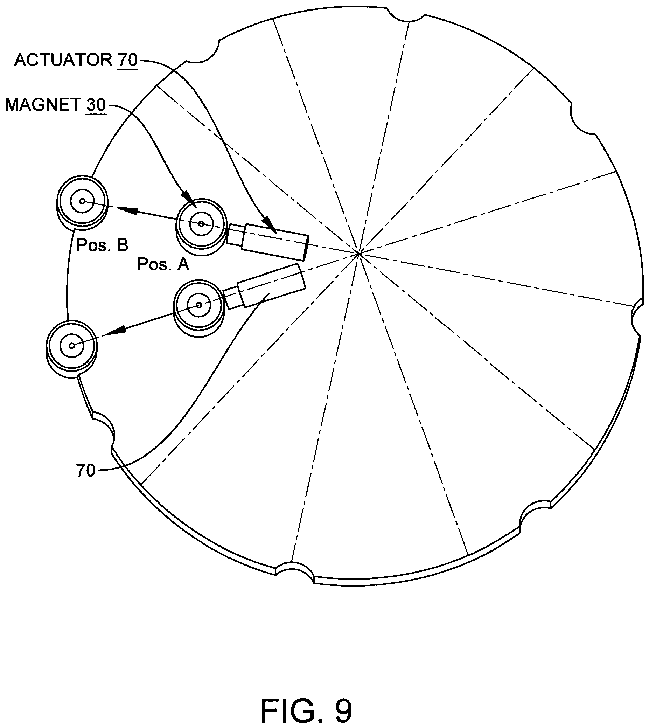

Figure9 shows a further possible variant of the invention.

It is similar to what has already been described and what hereinbefore stated remains valid.

However, in this case, the peripheral magnets 30 are not mounted steadily to the periphery of the rest plane, but however, they can be translated along the rest plane in such a way that they can be brough from a first position (A) close to the positioning point of the magnet (20) (therefore a position inside the plane) to a second perimeter position (B) of the plane.

As better shown in Figure 9, therefore, actuators 70 are provided that are arranged radially on the rest plane in such a way as to be actuated between an extended position in which they stretch out towards the periphery of said plane and in which they can be shortened to the initial position. The magnet is arranged at the actuator end and in this way, it can be translated along the rest plane to reach the peripheral position.

In fact, Figure 9 shows, by way of example, two magnets 30 each connected with an actuator 70 and the arrow highlights the passage from position A to peripheral position B.

Therefore, a number of actuators equivalent to the number of peripheral magnets 30 can be provided with radial pattern.

The actuators can be embedded into a suitable seat in the plane 10.

Therefore, in this way, in use, the dough 200 can be arranged at the central magnet and with the actuators which are placed with a radial pattern with the relative peripheral magnets 30 (or elements 30' sensitive to the magnetic field). In this configuration, the dough will cover both the central magnet and the peripheral ones, thus, once they have been activated, it will be possible to apply, above each magnet, as already described, the relative element sensitive to the magnetic field (or vice versa) such that from the beginning the dough will be locked to the center and all around in the edge areas by the peripheral magnets.

Therefore, one proceeds to activate the actuators 70 (for example through the control 50 and relative activation button). By stretching out towards the periphery, the actuators bring the peripheral magnets from the position A to the position B of Figure 9 thereby providing to stretch the dough in an entirely automatic way.

## Claims

1. A device for stretching the dough (200) of a baked product, preferably a pizza dough, and comprising:
- A rest plane (10) on which the dough to be stretched can be placed in use;
- First locking means (20) configured to allow to lock the dough on said rest plane;
- Second locking means (30) arranged at a certain radial distance from said first locking means and configured to lock an edge portion of said dough with which they come into contact in use.

2. The device, according to claim 1, wherein said second locking means (30) are fixed and placed at a predetermined radial distance from said first locking means in such a way that, in use, the dough kept locked in position on said rest plane by said first locking means (20) can be manually stretched by bringing one or more edge areas of the dough at said second locking means (30), which second locking means lock this edge area.

3. The device, according to claim 1, wherein said second locking means (30) are radially movable along said rest plane (10) in such a way as to be able to vary the radial distance from said first locking means (20) thereby being able to be actuated to pass from a first position (A) close to said first locking means (20) to a second position (B) radially spaced from said first locking means (20) and vice versa in such a way that, in use, the dough kept locked in position on said rest plane by said first locking means (20) can be contextually fixed by its edges to the second locking means (30) arranged in said first position (A) in such a way that, after actuating said second locking means (30), said second locking means (30) move to passe from said first position (A) to the second position (B) thus determining the stretching of the dough.

4. The device, according to one or more of the preceding claims, wherein said first locking means (20) are first magnetic-type locking means.

5. The device, according to claim 4, wherein said first magnetic-type locking means comprise at least one central magnet (20) cooperating with a central element (20') sensitive to the magnetic field, in particular a metallic element such as for example a ferrous element.

6. The device, according to claim 5, wherein said central magnet (20) or said element sensitive to the central magnetic field (20') is arranged below said rest plane or is arranged in a seat obtained in said rest plane (10), preferably in such a way as to be emerging and/or flush with said rest plane.

7. The device, according to one or more of the preceding claims 1 to 3, wherein said second locking means (30) are second magnetic-type locking means.

8. The device, according to claim 7, wherein said second magnetic-type locking means comprise at least a plurality of peripheral magnets (30) each cooperating with a respective element sensitive to the peripheral magnetic field (30'), such as a peripheral metallic element (30'), in particular a ferrous element.

9. The device, according to claim 8, wherein each peripheral magnet (30), or the relative peripheral element (30') sensitive to the magnetic field and each cooperating with said peripheral magnet, is arranged below said rest plane or arranged in a seat, in such a way as to be in both cases at a certain radial distance from the positioning of said first magnetic-type locking means (20, 20') , preferably in such a way that each peripheral magnet (30) or each peripheral element (30') sensitive to the magnetic field is flush with said rest plane (10).

10. The device, according to one or more of the preceding claims, wherein a central magnet (20) relative to said first magnetic-type locking means (20, 20') is arranged on said rest plane in a central or substantially central position of said rest plane and cooperating with said central element (20') sensitive to the magnetic field, preferably a metallic element such as a ferrous element, which is magnetically coupled, in a removable way, to said central magnet (20) and wherein around said central magnet (20), at a predetermined radial distance, said plurality of peripheral magnets (30) is arranged relative to the second magnetic-type locking means (30, 30') in such a way as to surround said central magnet (30) and with each of said peripheral magnets (30) cooperating with the own relative peripheral element (30') sensitive to the magnetic field, preferably a metallic element such as a ferrous element, which is magnetically coupled, in a removable way, to said peripheral magnet.

11. The device, according to one or more of the preceding claims, wherein on said rest plane (10) a central magnet (20) is arranged, in a central or substantially central position of said rest plane and cooperating with said central element sensitive to the magnetic field (20'), preferably a central metallic element for example such as a ferrous element, which is magnetically coupled, in a removable way, to said central magnet and wherein around said central magnet, at a predetermined radial distance, said plurality of peripheral magnets (30) is arranged in such a way as to surround said central magnet and with each of said peripheral magnet cooperating with the own relative peripheral element sensitive to the magnetic field (30'), preferably a metallic element such as a ferrous element, which is magnetically coupled, in a removable way, to said peripheral magnet.

12. The device, according to one or more of the previous claims, wherein, in case said second locking means (30) are fixed, a predetermined number of peripheral magnets (30) is arranged in a fixed way at a certain radial distance from the central magnet (20) in such a way as to surround it and, in case of radially movable second locking means, each peripheral magnet (30) is connected to an extendable/retractable actuator in such a way as to be able to pass from the first position (A) to the second position (B) and vice versa.

13. The device, according to one or more of the preceding claims, wherein the magnets relative to the first and second magnetic-type means can be activated/deactivated through a control (50) of activation/deactivation of the magnetic field.

14. A method for stretching the dough of a baked product, preferably pizza dough, the method comprising the following steps:
- Arranging a device according to one or more of the preceding claims from 1 to 13;
- Arranging the dough (200) on the rest plane (10) at least at the first locking means (20, 20') and locking the dough in said position;
- After having locked the dough, performing the subsequent step of stretching the dough.

15. The method, according to claim 14, wherein in case of fixed second locking means (30), said step of stretching comprises the operation of pulling a plurality of edge areas of the dough, thus determining an elongation of the dough, until each of said pluralities of edge areas are led at a second locking means (30, 30') for locking said edge area in position and, in case of movable second locking means (30), said step of stretching comprises the operation of applying the dough on the first locking means (20) and with the second locking means in said first position (A) close to the first locking means (20), thus locking the edge areas of the still unstretched dough on said second locking means and the subsequent actuation of the second locking means (20) which moving from the first position (A) to the second position (B) automatically stretch the dough.
